# FASCICULE DE BREVET EUROPEEN

(11) **EP 2 959 181 B1**
(45) Date de publication et mention de la délivrance du brevet: **15.03.2017**
(21) Numéro de dépôt: 14706918.1
(22) Date de dépôt: 11.02.2014
(51) Int. Cl.: F16F 15/121, F16F 15/123

(54) **AMORTISSEUR DE TORSION POUR DISQUE DE FRICTION D'EMBRAYAGE D'UN VÉHICULE AUTOMOBILE**
SCHWINGUNGSDÄMPFER FÜR EINE KUPPLUNGSREIBUNGSSCHEIBE EINES KRAFTFAHRZEUGS
VIBRATION DAMPER FOR CLUTCH FRICTION DISC OF A MOTOR VEHICLE

(30) Priorité: 22.02.2013 FR 1351599
(43) Date de publication de la demande: 30.12.2015
(73) Titulaire: Valeo Embrayages, 80009 Amiens Cedex 2 (FR)
(72) Inventeur: LOPEZ-PEREZ, Carlos, E-28005 Madrid (ES)
(74) Mandataire: Cardon, Nicolas
(86) Numéro de dépôt international: PCT/FR2014/050261
(87) Numéro de publication internationale: WO 2014/128380

(56) Documents cités:
- WO-A1-2011/006264
- FR-A1- 2 828 543
- FR-A1- 2 938 030
- GB-A- 2 468 030
- JP-A- H09 280 317

## Description

L'invention se rapporte à un amortisseur de torsion pour disque de friction d'embrayage.

L'invention concerne notamment un pré-amortisseur destiné à équiper un disque de friction. Un tel pré-amortisseur est destiné à filtrer les vibrations engendrées par les acyclismes du moteur à combustion, au régime de ralenti. A défaut, des vibrations pénétrant dans la boîte de vitesse y provoqueraient des chocs, bruits ou nuisances sonores particulièrement indésirables.

### Etat de la technique

Dans un véhicule automobile, un disque de friction d'embrayage permet de transmettre un couple entre un arbre entraînant, tel qu'un vilebrequin d'un moteur à combustion, et un arbre entraîné, tel qu'un arbre d'entrée de boîte de vitesses, par pincement dudit disque de friction entre un plateau de pression et un volant moteur. En outre, les disques de friction d'embrayage sont généralement équipés d'amortisseurs de torsion permettant d'absorber et amortir les vibrations et acyclismes générés par le moteur.

Les disques de friction comportent parfois deux amortisseurs couplés en séries, appelés amortisseur principal et pré-amortisseur. Un tel disque de friction est notamment décrit dans le document EP 0 732 525. Chaque amortisseur est muni d'éléments rotatifs, d'entrée et de sortie, susceptibles d'être entrainés en rotation l'un par rapport à l'autre autour de leur axe de rotation commun. Chaque amortisseur est équipé de moyens d'amortissement agencés pour transmettre le couple et amortir les acyclismes de rotation entre ses éléments d'entrée et de sortie.

Les moyens élastiques d'amortissement équipant ces amortisseurs de torsion sont des ressorts hélicoïdaux, à effet circonférentiel, dont les extrémités viennent, d'une part, en appui contre les éléments d'entrée et, d'autre part, en appui contre les éléments de sortie. Ainsi, toute rotation d'un desdits éléments par rapport à l'autre provoque une compression des ressorts de l'amortisseur dans un sens ou dans l'autre et ladite compression exerce une force de rappel apte à rappeler lesdits éléments vers une position angulaire relative de repos.

Les amortisseurs comportent chacun deux rondelles de guidage, solidaires en rotation, un voile disposé entre les deux rondelles de guidage et une pluralité de ressorts hélicoïdaux intervenant circonférentiellement entre le voile et les deux rondelles de guidage ; en étant montés dans des logements pratiqués, en vis-à-vis, dans les rondelles de guidage et le voile. Ainsi, l'assemblage et la fabrication des amortisseurs sont relativement complexes car ils comportent de nombreux éléments et le montage des ressorts hélicoïdaux dans les logements des rondelles de guidage et du voile est une opération délicate.

En outre, le volume alloué aux ressorts hélicoïdaux étant limité, le débattement angulaire entre l'entrée et la sortie des amortisseurs de torsion est limité, de telle sorte que les ressorts hélicoïdaux présentent une raideur relativement importante pour une filtration optimale des acyclismes.

### Objet de l'invention

L'invention vise à remédier à ces problèmes en proposant un amortisseur de torsion dont la fabrication et l'assemblable soient simplifiés.

A cet effet, et selon un premier aspect, l'invention concerne un amortisseur de torsion pour disque de friction d'embrayage comprenant :
- un élément d'entrée et un élément de sortie mobiles en rotation l'un par rapport à l'autre autour d'un axe de rotation X;
- des moyens d'amortissement pour transmettre un couple et amortir les acyclismes de rotation entre les éléments d'entrée et de sortie ;
- l'élément d'entrée comprenant deux flasques, solidaires en rotation, disposés de part et d'autre des moyens d'amortissement et définissant ainsi une cassette de logement desdits moyen d'amortissement ;
ledit amortisseur de torsion étant remarquable en ce que les moyens d'amortissement comportent une lame élastique, solidaire en rotation d'un desdits éléments d'entrée et de sortie, et pourvue d'une surface de came; et en ce que l'amortisseur comporte un suiveur de came, porté par l'autre desdits éléments d'entrée et de sortie, et agencé pour coopérer avec ladite surface de came ;
ladite surface de came étant agencée de telle sorte que, pour un débattement angulaire entre l'élément d'entrée et l'élément de sortie par rapport à une position angulaire de repos, le suiveur de came exerce un effort de flexion sur la lame élastique produisant une force de réaction apte à rappeler lesdits éléments d'entrée et de sortie vers ladite position angulaire de repos.

Ainsi, la construction et l'assemblage d'un tel amortisseur est simplifié puisqu'il nécessite un nombre restreint de composants par comparaison avec un amortisseur de torsion à ressorts hélicoïdaux.

En outre, les moyens d'amortissement sont moins sensibles à la force centrifuge que les ressorts hélicoïdaux de l'art antérieur de telle sorte que la qualité de l'amortissement des vibrations n'est que peu impacté par la force centrifuge.

De plus, la structure d'un tel amortisseur permet d'obtenir des débattements relatifs importants ce qui permet l'utilisation de moyens d'amortissement présentant une raideur restreinte afin d'en améliorer l'efficacité.

Par ailleurs, un tel amortisseur peut présenter une courbe caractéristique représentant les variations du couple transmis en fonction du débattement angulaire qui présente des variations de pentes sans point d'inflexion ou discontinuité. Ainsi, la courbe caractéristique ne présente pas de zone de changement brusque de raideurs qui provoque des discontinuités et chocs nuisant à la qualité de l'amortissement.

Enfin, la surface de came étant portée par la lame élastique, la fabrication d'un amortisseur selon l'invention peut être en partie standardisée. En effet, seules la géométrie et les caractéristiques de la lame nécessitent des adaptations lorsque les caractéristiques d'un amortisseur doivent être adaptées aux caractéristiques de l'application visée.

Selon d'autres modes de réalisation avantageux, un tel amortisseur de torsion peut présenter une ou plusieurs des caractéristiques suivantes :
- la lame élastique est solidaire en rotation de l'élément de sortie et le suiveur de came est porté par un élément de fixation permettant de fixer les flasques l'un à l'autre. Un tel agencement est particulièrement compact et nécessite un nombre limité de composants.
- le suiveur de came est un galet monté mobile en rotation sur l'élément de fixation des flasques.
- le galet est monté mobile en rotation sur l'élément de fixation des flasques par l'intermédiaire d'un palier à roulement.
- l'élément de sortie comporte un moyeu présentant des cannelures internes destinées à coopérer avec des cannelures d'un arbre d'entrée de boîte de vitesse et la lame élastique est portée par un corps annulaire présentant des dentures coopérant avec des dentures complémentaires formées sur le moyeu. Ainsi, le montage des moyens d'amortissement est simple puisqu'ils coopèrent par denture avec la sortie de l'amortisseur.
- la lame élastique est maintenue axialement sur le moyeu.
- la denture du moyeu coopérant avec la denture du corps annulaire est bordée d'une part par une surface de butée et d'autre part par un sertissage formé sur le moyeu de sorte à permettre un maintien axial du corps annulaire sur le moyeu.
- l'amortisseur de torsion comporte une seconde lame élastique pourvue d'une surface de came et un second suiveur de came agencé pour coopérer avec la surface de came de ladite seconde lame élastique. Un tel agencement permet d'augmenter la capacité en couple de l'amortisseur.
- la première et la seconde lames élastiques sont portées par un corps annulaire et sont symétriques par rapport à l'axe de rotation X. Ainsi, l'amortisseur est équilibré.
- le suiveur de came est disposé radialement à l'extérieur de la lame élastique. Une telle disposition permet de retenir radialement la lame élastique lorsqu'elle est soumise à la force centrifuge. En outre, cette disposition permet une augmentation de la raideur de la lame élastique sous l'effet de la force centrifuge.
- la surface de came est formée à une extrémité libre de la lame élastique.
- la lame comporte une portion courbe s'étendant de manière circonférentielle à l'extrémité libre de laquelle est formée la surface de came. Une telle structure permet d'obtenir à la fois une faible rigidité et une résistance mécanique satisfaisante.
- la lame élastique comporte une pluralité de lamelles disposées axialement les unes contre les autres.

Selon un deuxième aspect, l'invention concerne un disque de friction d'embrayage comportant un amortisseur de torsion selon le premier aspect de l'invention.

Dans un mode de réalisation, l'un des deux flasques de l'élément d'entrée de l'amortisseur de torsion selon le premier aspect de l'invention est constitué par un voile de sortie d'un second amortisseur.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux figures annexées.

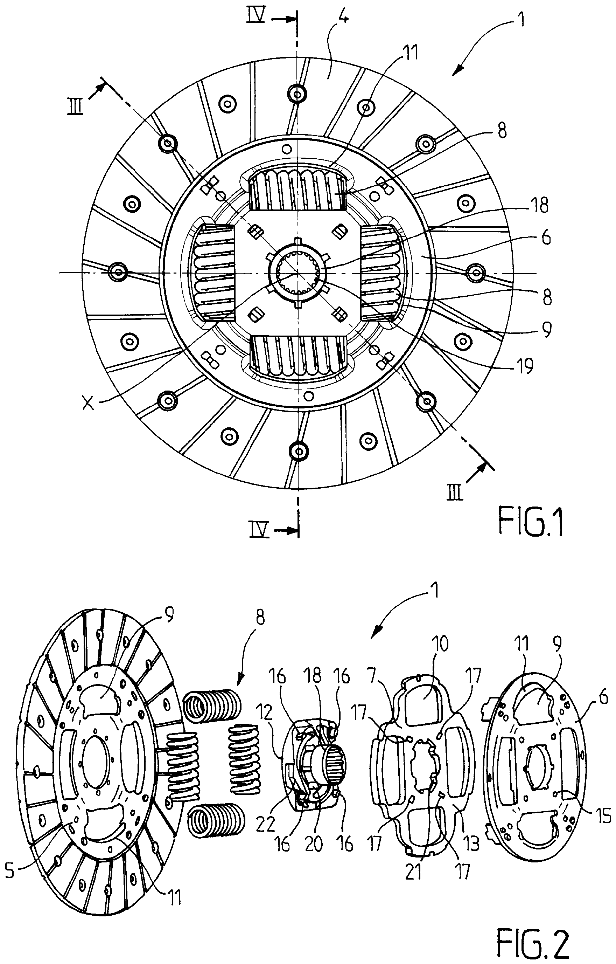

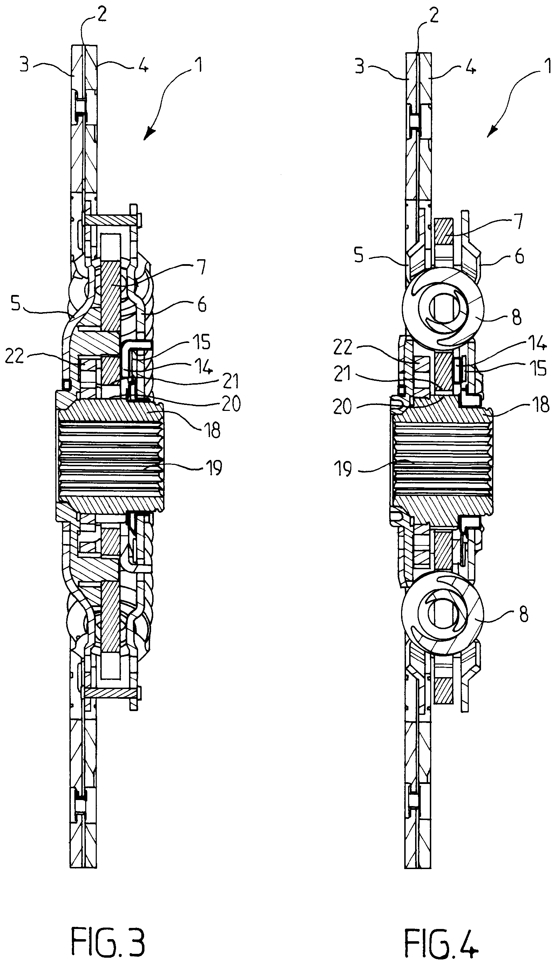

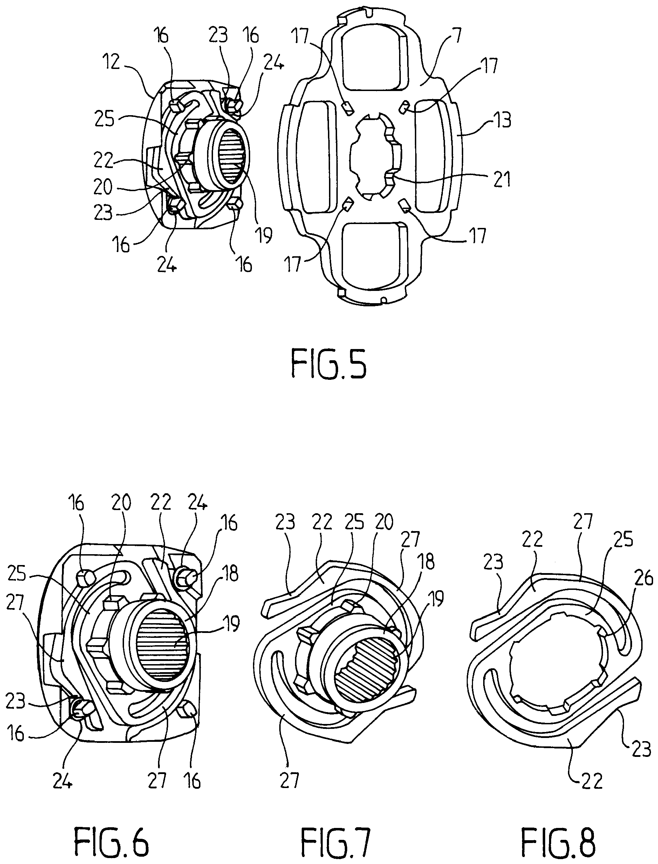

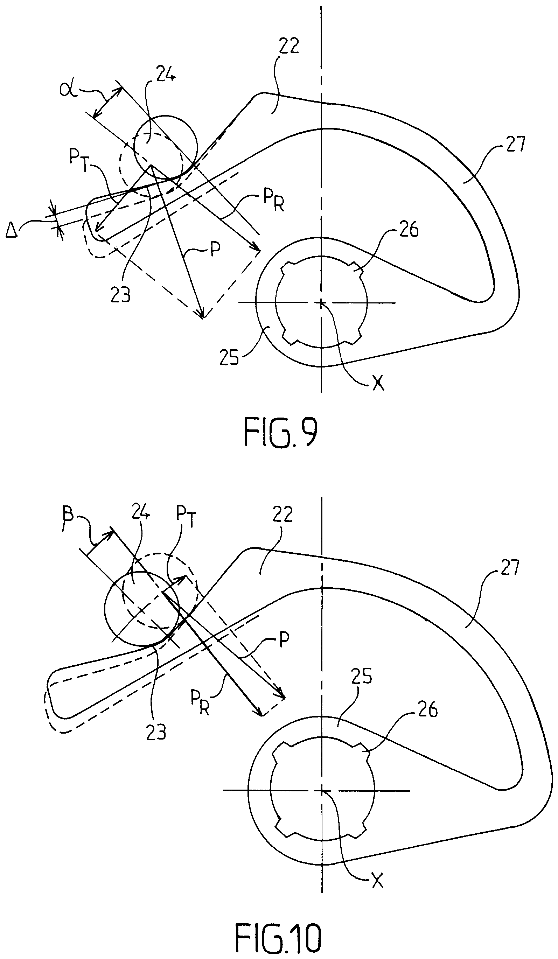

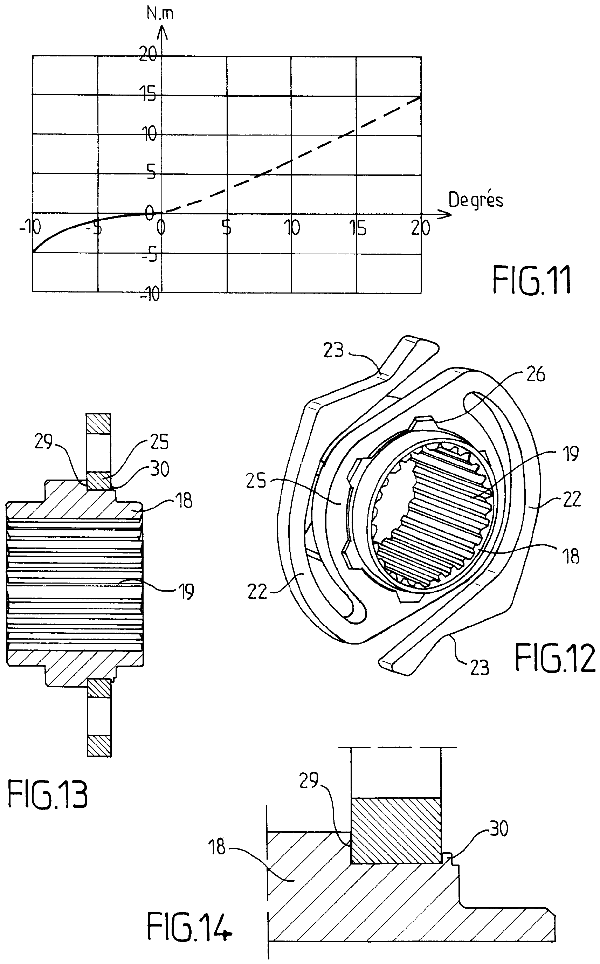

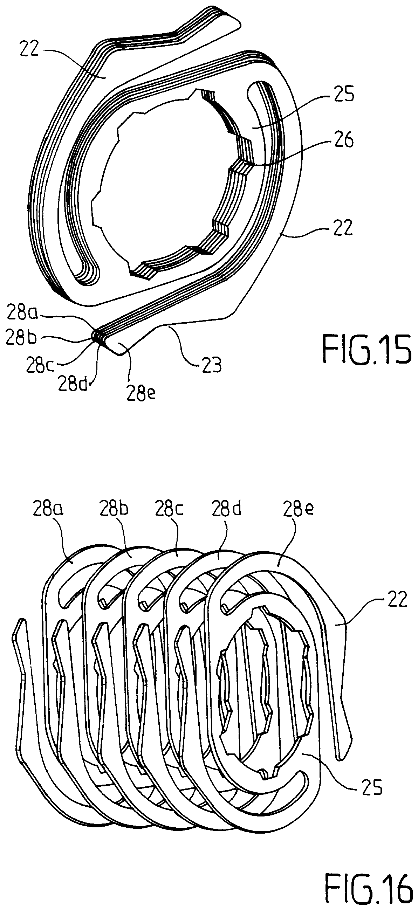

Sur ces figures :
- **La** **figure 1** est une vue de face d'un disque de friction d'embrayage.
- **La** **figure 2** est une vue éclatée du disque de friction de la figure 1.
- **La** **figure 3** est une vue en coupe du disque de friction de la figure 1 dans le plan III-III.
- **La** **figure 4** est une vue en coupe du disque de friction de la figure 1 dans le plan IV-IV.
- **La** **figure 5** est une vue partiellement éclatée du pré-amortisseur.
- **La** **figure 6** est une vue en perspective d'un sous-ensemble du pré-amortisseur de la figure 5.
- **La** **figure 7** est une vue en perspective des moyens d'amortissement à lames élastiques et du moyeu du disque de friction.
- **La** **figure 8** est une vue en perspective des moyens d'amortissement à lames élastiques.
- **La** **figure 9** illustre le fléchissement d'une lame d'un amortisseur de torsion lors d'un débattement angulaire entre les éléments d'entrée et de sortie de l'amortisseur, dans un sens direct.
- **La** **figure 10** illustre le fléchissement de la lame lors d'un débattement angulaire dans un sens rétro.
- **La** **figure 11** est un exemple de courbes caractéristiques d'un pré-amortisseur, représentant le couple transmis en fonction du débattement angulaire.
- **La** **figure 12** est une vue en perspective des moyens d'amortissement à lames élastiques et du moyeu du disque de friction selon une variante de réalisation.
- **La** **figure 13** est une vue en coupe des moyens d'amortissement à lames élastiques et du moyeu de la figure 12.
- **La** **figure 14** est une vue détaillée de l'assemblage entre la lame élastique et le moyeu des figures 13 et 14.
- **La** **figure 15** est une vue en perspective d'une lame élastique selon une variante de réalisation.
- **La** **figure 16** est une éclatée de la lame élastique de la figure 15.

Dans la description et les revendications, on utilisera, les termes "externe" et "interne" ainsi que les orientations "axiale" et "radiale" pour désigner, selon les définitions données dans la description, des éléments du disque de friction d'embrayage. Par convention, l'orientation "radiale" est dirigée orthogonalement à l'axe X de rotation du disque d'embrayage déterminant l'orientation "axiale" et, de l'intérieur vers l'extérieur en s'éloignant dudit axe, l'orientation "circonférentielle" est dirigée orthogonalement à l'axe de rotation du disque d'embrayage et orthogonalement à la direction radiale.

Les termes "externe" et "interne" sont utilisés pour définir la position relative d'un élément par rapport à un autre, par référence à l'axe X de rotation du disque d'embrayage, un élément proche de l'axe est ainsi qualifié d'interne par opposition à un élément externe situé radialement en périphérie.

Le disque de friction d'embrayage 1, représenté sur les figures 1 à 4, est destiné à être monté solidaire en rotation d'un arbre mené et à être disposé entre un plateau de pression d'un embrayage et un plateau de réaction, solidaires en rotation d'un arbre menant. Lors d'une opération d'embrayage, le plateau de pression serre le disque de friction 1 contre le plateau de réaction et le couple de l'arbre menant est alors transmis à l'arbre mené.

Le disque de friction 1 comporte un disque de support 2, illustré sur les figures 3 et 4, portant, sur chacune de ses faces, des garnitures de friction 3, 4 destinées à être serrées entre les plateaux de pression et de réaction. Le disque de support 2 est fixé sur deux rondelles de guidages 5, 6, formant l'élément d'entrée de l'amortisseur principal, disposées de part et d'autre d'un voile 7, formant l'élément de sortie dudit amortisseur principal. Les rondelles de guidage 5, 6 sont fixés l'une à l'autre, par rivetage, par exemple.

Les moyens d'amortissement de l'amortisseur principal sont ici des organes élastiques à action circonférentielle, tels que des ressorts hélicoïdaux 8. Les ressorts hélicoïdaux 8 sont montés dans des fenêtres de logement 9, 10 pratiquées, en vis-à-vis, dans les rondelles de guidage 5, 6 et dans le voile 7. Les ressorts hélicoïdaux 8 sont par exemple montés par paires de ressorts concentriques. Les ressorts hélicoïdaux 8 sont maintenus axialement dans leurs logements respectifs par les bords extérieurs 11 des fenêtres 9 des rondelles de guidage 5, 6. Les extrémités des ressorts hélicoïdaux 8 sont en appui contre les bords radiaux des fenêtres de logement 9, 10 de telle sorte que lesdits ressorts hélicoïdaux 8 sont aptes à transmettre un couple entre les rondelles de guidage 5, 6 et le voile 7. Les ressorts hélicoïdaux 8 présentent une raideur suffisante pour permettre la transmission du couple moteur maximal. L'amortisseur principal est également équipé de moyens de frottement à action axiale, représentés sur les figures 3 et 4, destinés à dissiper l'énergie accumulée dans les ressorts hélicoïdaux 8. Les moyens de frottement à action axiale comportent une rondelle de frottement 14 et une rondelle élastique 15, également appelée rondelle « Belleville ». La rondelle de frottement 14 est solidarisée en rotation à la rondelle de guidage 6 par des doigts axiaux, représentés sur la figure 3, emboîtés dans des orifices formés dans ladite rondelle de guidage 6. La rondelle élastique 15 est intercalée sous contrainte entre la rondelle de guidage 6 et la rondelle de frottement 15 de sorte à plaquer ladite rondelle de frottement 15 contre le voile 7.

Le disque de friction 1 est également équipé d'un pré-amortisseur qui est représenté, de manière détaillée, sur la figure 5. Un tel pré-amortisseur a essentiellement pour fonction de filtrer les bruits tels que les bruits de boîte ou les bruits de point mort dans le domaine du régime ralenti du moteur alors que l'amortisseur principal est destiné à filtrer les vibrations dans le régime de marche du véhicule. Le pré-amortisseur est ici implanté radialement en dessous des ressorts hélicoïdaux 8 de l'amortisseur principal et axialement entre les deux rondelles de guidage 5, 6 de l'amortisseur principal.

L'élément d'entrée du pré-amortisseur comporte deux flasques 12, 13, solidaires en rotation, disposés axialement de part et d'autre des moyens d'amortissement du pré-amortisseur. Les flasques 12, 13 forment ainsi une cassette de logement des moyens d'amortissement du pré-amortisseur.

Dans le mode de réalisation représenté, l'un des flasques 13 est constitué par le voile 7 de sortie de l'amortisseur principal. Le flasque 12 est fixé en rotation sur le voile 7 par une pluralité de pattes de fixation 16 reçues dans des orifices 17 de forme complémentaire, ménagés dans le voile 7.

Dans un autre mode de réalisation non représenté, les deux flasques 13, 14 sont distincts du voile 7 de sortie de l'amortisseur principal. Ils sont dans ce cas, fixés en rotation audit voile 7 afin de coupler en série l'amortisseur principal et le pré-amortisseur.

L'élément de sortie du pré-amortisseur est un moyeu 18 destiné à être couplé en rotation à un arbre mené, tel qu'un arbre d'entrée d'une boite de vitesses. A cet effet, le moyeu 18 comporte des cannelures longitudinales internes 19 destinées à coopérer avec des cannelures complémentaires formées sur l'arbre mené. Le moyeu 18 comporte sur sa périphérie externe une denture 20 destinée à engrener, avec un jeu circonférentiel déterminé, avec une denture correspondante 21 ménagée sur une périphérie interne du voile 7. Les dentures 20, 21 forment des butées angulaires permettant de limiter le débattement relatif entre l'élément d'entrée et l'élément de sortie du pré-amortisseur lorsque le couple à transmettre est supérieur à un seuil. Lorsque le jeu circonférentiel est rattrapé, le voile 7 et le moyeu 18 coopèrent entre eux par butée. Dans ce cas, le pré-amortisseur n'intervient plus dans la transmission du couple qui est directement transmis du voile 7 au moyeu 18.

Les moyens d'amortissement comportent au moins une lame élastique 22 montée solidaire en rotation du moyeu 18. Pour ce faire, la lame élastique 22 est portée par un corps annulaire 25 présentant une denture interne 26, représentée sur la figure 8, coopérant avec une denture externe, de forme complémentaire, formée sur le moyeu 18.

Dans un mode de réalisation avantageux, représenté sur les figures 12 à 14, le corps annulaire 25 portant les lames élastiques 22 est maintenu axialement sur le moyeu 22. Pour ce faire, la denture externe formée sur le moyeu 18 et coopérant avec la denture interne 26 du corps annulaire 25 est bordée, d'une part, par une surface de butée 29 et, d'autre part, par un sertissage 30 pratiqué sur le corps du moyeu 18.

Dans le mode de réalisation représenté sur les figures 5 à 8, les moyens d'amortissement comportent deux lames élastiques 22 portées par le corps annulaire 25. Les deux lames élastiques 22 sont symétriques par rapport à l'axe de rotation X du disque d'embrayage.

Les lames élastiques 22 présentent, à une extrémité libre, une surface de came 23 qui est agencée pour coopérer avec un suiveur de came : les galets 24. Les lames élastiques 22 comportent une portion courbe 27 s'étendant de manière sensiblement circonférentielle. Le rayon de courbure de la portion courbe 27 ainsi que la longueur de cette portion courbe 27 sont déterminés en fonction de la raideur souhaitée de la lame élastique22. La lame élastique 22 peut au choix être réalisée d'un seul tenant ou être composée d'une pluralité de lamelles 28a, 28b, 28c, 28d, 28e disposées axialement les unes contre les autres, tel qu'illustré sur la figure 15.

Dans le mode de réalisation de la figure 15, les lames élastiques 22 ainsi que le corps annulaire 25 sont constitués d'une pluralité de lamelles 28a, 28b, 28c, 28d, 28e s'étendant axialement les unes contre les autres. Les lamelles peuvent être collées les unes aux autres. Dans un mode de réalisation, la pluralité de lamelles 28a, 28b, 28c, 28d, 28e est monté sur un moyeu 18 tel que représenté sur les figures 12 à 14. Dans ce cas, l'assemblage entre les lamelles 28a, 28b, 28c, 28d, 28e s'effectue lors du sertissage du moyeu 18.

Les galets 24 sont ici portés par des pattes de fixation 16 permettant de solidariser le flasque 12 au voile 7. Les galets 24 sont avantageusement montés mobiles en rotation sur lesdites pattes de fixation 16 autour d'un axe de rotation parallèle à l'axe de rotation X. Les galets 24 sont maintenus en appui contre leur surface de came 23 respective et sont agencés pour rouler contre ladite surface de came 23 lors d'un mouvement relatif entre les éléments d'entrée et de sortie du pré-amortisseur. Les galets 24 sont disposés radialement à l'extérieur de leur surface de came 23 respective de sorte à maintenir radialement les lames élastiques 22 lorsqu'elles sont soumises à la force centrifuge. De façon à réduire les frottements parasitaires susceptibles d'affecter la fonction d'amortissement, les galets 24 peuvent être montés en rotation sur les pattes de fixation 16 au moyen d'un palier à roulement. A titre d'exemple, le palier à roulement pourra être un roulement à billes ou à rouleaux. Dans un mode de réalisation, les galets 24 présentent un revêtement anti-friction.

La surface de came 23 est agencée de telle sorte que, pour un débattement angulaire entre l'élément d'entrée et l'élément de sortie, par rapport à une position angulaire relative de repos, le galet 24 se déplace sur la surface de came 23 et, ce faisant, exerce un effort de flexion sur la lame élastique 22. Par réaction, la lame élastique 22 exerce sur le galet 24 une force de rappel qui tend à ramener les éléments d'entrée 1 et de sortie 2 vers leur position angulaire relative de repos.

Ainsi, les lames élastiques 22 sont aptes à transmettre un couple entraînant de l'élément d'entrée vers l'élément de sortie (sens direct) et un couple résistant de l'élément de sortie vers l'élément d'entrée (sens rétro).

Le fonctionnement de moyens d'amortissement à lame(s) élastique(s) sera maintenant détaillé en relation avec les figures 9 et 10.

Lorsqu'un couple moteur entraînant est transmis de l'élément d'entrée vers l'élément de sortie (sens direct), le couple à transmettre entraîne un débattement relatif entre l'élément d'entrée et l'élément de sortie selon une première direction (voir figure 9). Le galet 24 est alors déplacé d'un angle α par rapport à la lame élastique 22. Le déplacement du galet 24 sur la surface de came 23 entraîne une flexion de la lame élastique 22 selon une flèche Δ. Pour illustrer la flexion de la lame élastique 22, la lame 22 est représentée en traits pleins dans sa position angulaire de repos et en traits pointillés lors d'un débattement angulaire.

L'effort de flexion P dépend notamment de la géométrie de la lame élastique 22 et de sa matière, en particulier de son module d'élasticité transversal. L'effort de flexion P se décompose en une composante radiale Pr et en une composante tangentielle Pt. La composante tangentielle Pt permet la transmission du couple moteur. En réaction, la lame élastique 22 exerce sur le galet 24 une force de réaction dont la composante tangentielle constitue une force de rappel qui tend à ramener les éléments d'entrée et de sortie du pré-amortisseur vers leur position angulaire relative de repos.

Lorsqu'un couple résistant est transmis de l'élément de sortie vers l'élément d'entrée (sens rétro), le couple à transmettre entraîne un débattement relatif entre l'élément d'entrée et l'élément de sortie selon une seconde direction opposée (voir figure 10). Le galet 24 est alors déplacé d'un angle β par rapport à la lame élastique 22. Dans ce cas, la composante tangentielle Pt de l'effort de flexion présente une direction opposée à la composante tangentielle de l'effort de flexion illustré sur la figure 9. De même, la lame élastique 22 exerce une force de réaction, de direction contraire à celle illustrée sur la figure 9, de sorte à ramener les éléments d'entrée et de sortie vers leur position angulaire relative de repos.

Les vibrations de torsion et les irrégularités de couple qui sont produites par le moteur à combustion interne sont transmises par l'arbre menant à l'élément d'entrée 1 et génèrent des rotations relatives entre les éléments d'entrée et de sortie du pré-amortisseur. Ces vibrations et irrégularités sont amorties par la flexion de la lame élastique 22.

La figure 11 illustre une courbe caractéristique d'amortisseurs de torsion réalisée conformément aux enseignements de l'invention. Cette courbe caractéristique représente le couple transmis, exprimé en N.m, en fonction du débattement angulaire, exprimé en degré. Le débattement relatif entre les éléments d'entrée et de sortie, dans le sens direct, est représenté en traits pointillés alors que le débattement, dans le sens rétro est représenté en traits pleins. On note qu'un amortisseur de torsion selon l'invention permet notamment d'obtenir des courbes caractéristiques d'amortissement dont la pente varie progressivement, sans discontinuité.

De manière avantageuse, la surface de came 23 et la lame élastique 22 sont agencées de telle sorte que la fonction caractéristique du couple transmis en fonction du débattement angulaire est une fonction monotone.

Pour certaines applications, la surface de came 23 et la lame élastique 22 pourront être agencées de telle sorte que les caractéristiques du couple transmis en fonction du débattement angulaire, dans le sens rétro et dans le sens direct soient symétriques par rapport à la position angulaire de repos.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Amortisseur de torsion pour disque de friction (1) d'embrayage comprenant :
- un élément d'entrée et un élément de sortie mobiles en rotation l'un par rapport à l'autre autour d'un axe de rotation X;
- des moyens d'amortissement pour transmettre un couple et amortir les acyclismes de rotation entre les éléments d'entrée et de sortie ;
- l'élément d'entrée comprenant deux flasques (12, 13), solidaires en rotation, disposés de part et d'autre des moyens d'amortissement et définissant ainsi une cassette de logement desdits moyen d'amortissement ;
ledit amortisseur de torsion étant **caractérisé en ce que** les moyens d'amortissement comportent une lame élastique (22), solidaire en rotation d'un desdits éléments d'entrée et de sortie, et pourvue d'une surface de came (23); et **en ce que** l'amortisseur comporte un suiveur de came (24), porté par l'autre desdits éléments d'entrée et de sortie, et agencé pour coopérer avec ladite surface de came (23) ;
ladite surface de came (23) étant agencée de telle sorte que, pour un débattement angulaire entre l'élément d'entrée et l'élément de sortie par rapport à une position angulaire de repos, le suiveur de came (24) exerce un effort de flexion sur la lame élastique (22) produisant une force de réaction apte à rappeler lesdits éléments d'entrée et de sortie vers ladite position angulaire de repos.

2. Amortisseur de torsion selon la revendication 1, dans lequel ladite lame élastique (22) est solidaire en rotation de l'élément de sortie et dans lequel le suiveur de came (24) est porté par un élément de fixation (16) permettant de fixer les flasques (12, 13) l'un à l'autre.

3. Amortisseur de torsion selon la revendication 2, dans lequel le suiveur de came est un galet (24) monté mobile en rotation sur l'élément de fixation (16).

4. Amortisseur de torsion selon la revendication 3, dans lequel le galet (24) est monté mobile en rotation sur l'élément de fixation (16) par l'intermédiaire d'un palier à roulement.

5. Amortisseur de torsion selon l'une des revendications 1 à 4, dans lequel l'élément de sortie comporte un moyeu (18) présentant des cannelures internes (19) destinées à coopérer avec des cannelures d'un arbre d'entrée de boîte de vitesse et la lame élastique (22) est portée par un corps annulaire (25) présentant une denture (26) coopérant avec une denture complémentaire formée sur le moyeu (18).

6. Amortisseur de torsion selon la revendication 5, dans lequel la lame élastique (22) est maintenue axialement sur le moyeu (18).

7. Amortisseur de torsion selon la revendication 6, dans lequel la denture du moyeu (18) coopérant avec la denture (26) du corps annulaire (25) est bordée d'une part par une surface de butée et d'autre part par un sertissage formé sur le moyeu (18) de sorte à permettre un maintien axial du corps annulaire (25) sur le moyeu (18).

8. Amortisseur de torsion selon l'une quelconque des revendications 1 à 7, comportant une seconde lame élastique (22) pourvue d'une surface de came (23) et un second suiveur de came (24) agencé pour coopérer avec la surface de came (23) de ladite seconde lame élastique (22).

9. Amortisseur de torsion selon la revendication 8, dans lequel la première et la seconde lames élastiques (22) sont portées par un corps annulaire (25) et sont symétriques par rapport à l'axe de rotation X.

10. Amortisseur de torsion selon l'une des revendications 1 à 9, dans lequel le suiveur de came (24) est disposé radialement à l'extérieur de la lame élastique (22).

11. Amortisseur de torsion selon l'une des revendications 1 à 10, dans lequel la surface de came (23) est formée à une extrémité libre de la lame élastique (22).

12. Amortisseur de torsion selon la revendication 11, dans lequel la lame (22) comporte une portion courbe (27), s'étendant de manière circonférentielle, à l'extrémité libre de laquelle est formée la surface de came (23).

13. Amortisseur de torsion selon l'une quelconque des revendications 1 à 12, dans lequel la lame élastique (22) comporte une pluralité de lamelles (28a, 28b, 28c, 28d, 28e) disposées axialement les unes contre les autres.

14. Disque de friction (1) d'embrayage comportant un amortisseur de torsion selon l'une quelconque des revendications 1 à 13.

15. Disque de friction (1) selon la revendication 14, dans lequel l'un des deux flasques (12, 13) de l'élément d'entrée dudit amortisseur de torsion est constitué par un voile (7) de sortie d'un second amortisseur.

## Patentansprüche

1. Torsionsdämpfer für Kupplungsreibungsscheibe (1), der Folgendes umfasst:
- ein Eingangselement und ein Ausgangselement, die relativ zueinander um eine Drehachse X rotatorisch beweglich sind;
- Dämpfungsmittel, um ein Drehmoment zu übertragen und um die azyklischen Drehbewegungen zwischen dem Eingangs- und dem Ausgangselement zu dämpfen;
- wobei das Eingangselement zwei drehfeste Flansche (12, 13) aufweist, die beiderseits der Dämpfungsmittel angeordnet sind und dadurch eine Aufnahmekassette für die Dämpfungsmittel definieren;
wobei der Torsionsdämpfer **dadurch gekennzeichnet ist, dass** die Dämpfungsmittel ein elastisches Plättchen (22) umfassen, das mit dem Eingangselement oder dem Ausgangselement drehfest verbunden ist und mit einer Nockenoberfläche (23) versehen ist; und dass der Dämpfer einen Nockenfolger (24) umfasst, der von dem anderen des Eingangselements und des Ausgangselements getragen wird und dafür ausgelegt ist, mit der Nockenoberfläche (23) zusammenzuwirken;
- wobei die Nockenoberfläche (23) so beschaffen ist, dass bei einem Winkelausschlag zwischen dem Eingangselement und dem Ausgangselement in Bezug auf eine Ruhewinkelposition der Nockenfolger (24) eine Biegekraft auf das elastische Plättchen (22) ausübt, die eine Gegenkraft erzeugt, die das Eingangselement und das Ausgangselement in ihre Ruhewinkelposition zurückstellen kann.

2. Torsionsdämpfer nach Anspruch 1, wobei das elastische Plättchen (22) mit dem Ausgangselement drehfest verbunden ist und wobei der Nockenfolger (24) von einem Befestigungselement (16) getragen wird, das ermöglicht, die Flansche (12, 13) aneinander zu befestigen.

3. Torsionsdämpfer nach Anspruch 2, wobei der Nockenfolger eine Rolle (24) ist, die an dem Befestigungselement (16) drehbar beweglich montiert ist.

4. Torsionsdämpfer nach Anspruch 3, wobei die Rolle (24) an dem Befestigungselement (16) über ein Wälzlager drehbar beweglich montiert ist.

5. Torsionsdämpfer nach einem der Ansprüche 1 bis 4, wobei das Ausgangselement eine Nabe (18) umfasst, die innere Rillen (19) aufweist, die dazu bestimmt sind, mit Rillen einer Getriebeeingangswelle zusammenzuwirken, und das elastische Plättchen (22) von einem ringförmigen Körper (25) getragen wird, der eine Zahnung (26) aufweist, die mit einer komplementären Zahnung zusammenwirkt, die an der Nabe (18) ausgebildet ist.

6. Torsionsdämpfer nach Anspruch 5, wobei das elastische Plättchen (22) an der Nabe (18) axial gehalten wird.

7. Torsionsdämpfer nach Anspruch 6, wobei die Zahnung der Nabe (18), die mit der Zahnung (26) des ringförmigen Körpers (25) zusammenwirkt, einerseits durch eine Anschlagoberfläche und andererseits durch eine Quetschverbindung, die an der Nabe (18) gebildet ist, begrenzt ist, derart, dass eine axiale Immobilisierung des ringförmigen Körpers (25) an der Nabe (18) ermöglicht wird.

8. Torsionsdämpfer nach einem der Ansprüche 1 bis 7, der ein zweites elastisches Plättchen (22) umfasst, das mit einer Nockenoberfläche (23) versehen ist, und einen zweiten Nockenfolger (24) umfasst, der dafür ausgelegt ist, mit der Nockenoberfläche (23) des zweiten elastischen Plättchens (22) zusammenzuwirken.

9. Torsionsdämpfer nach Anspruch 8, wobei das erste und das zweite elastische Plättchen (22) von einem ringförmigen Körper (25) getragen werden und in Bezug auf die Drehachse X symmetrisch sind.

10. Torsionsdämpfer nach einem der Ansprüche 1 bis 9, wobei der Nockenfolger (24) radial außerhalb des elastischen Plättchens (22) angeordnet ist.

11. Torsionsdämpfer nach einem der Ansprüche 1 bis 10, wobei die Nockenoberfläche (23) an einem freien Ende des elastischen Plättchens (22) gebildet ist.

12. Torsionsdämpfer nach Anspruch 11, wobei das Plättchen (22) einen gekrümmten Abschnitt (27) umfasst, der sich in Umfangsrichtung erstreckt und an dessen freiem Ende die Nockenoberfläche (23) gebildet ist.

13. Torsionsdämpfer nach einem der Ansprüche 1 bis 12, wobei das elastische Plättchen (22) mehrere Lamellen (28a, 28b, 28c, 28d, 28e) umfasst, die axial nebeneinander angeordnet sind.

14. Kupplungsreibungsscheibe (1), die einen Torsionsdämpfer nach einem der Ansprüche 1 bis 13 umfasst.

15. Reibungsscheibe (1) nach Anspruch 14, wobei einer der zwei Flansche (12, 13) des Eingangselements des Torsionsdämpfers durch eine Ausgangsabdeckung (7) eines zweiten Dämpfers gebildet ist.

## Claims

1. Torsion damper for a clutch friction disk (1) comprising:
- an input element and an output element which are rotatably movable relative to one another about an axis of rotation X;
- damping means for transmitting a torque and damping the acyclic rotations between the input and output elements;
- the input element comprising two flanges (12, 13), which are fixed in terms of rotation and arranged on either side of the damping means, thus defining a cassette for housing said damping means;
said torsion damper being **characterized in that** the damping means comprise a resilient blade (22), which is fixed in terms of rotation to one of said input and output elements, and provided with a cam surface (23); and **in that** the damper comprises a cam follower (24) supported by the other of said input and output elements, and arranged so as to cooperate with said cam surface (23);
said cam surface (23) being arranged such that, for an angular displacement between the input element and the output element relative to an angular resting position, the cam follower (24) exerts a bending force on the resilient blade (22) producing a reaction force capable of returning said input and output elements toward said angular resting position.

2. Torsion damper according to Claim 1, in which said resilient blade (22) is fixed in terms of rotation to the output element and in which the cam follower (24) is supported by a fixing element (16) permitting the flanges (12, 13) to be fixed to one another.

3. Torsion damper according to Claim 2, in which the cam follower is a roller (24) rotatably movably mounted on the fixing element (16).

4. Torsion damper according to Claim 3, in which the roller (24) is rotatably movably mounted on the fixing element (16) by means of a rolling bearing.

5. Torsion damper according to one of Claims 1 to 4, in which the output element comprises a hub (18) having internal channels (19) designed to cooperate with the channels of an input shaft of a gearbox and the resilient blade (22) is supported by an annular body (25) having teeth (26) cooperating with complementary teeth formed on the hub (18).

6. Torsion damper according to Claim 5, in which the resilient blade (22) is axially retained on the hub (18).

7. Torsion damper according to Claim 6, in which the teeth of the hub (18) cooperating with the teeth (26) of the annular body (25) are delimited, on the one hand, by an abutment surface and, on the other hand, by crimping formed on the hub (18) so as to permit axial retention of the annular body (25) on the hub (18).

8. Torsion damper according to any one of Claims 1 to 7, comprising a second resilient blade (22) provided with a cam surface (23) and a second cam follower (24) which is arranged so as to cooperate with the cam surface (23) of said second resilient blade (22).

9. Torsion damper according to Claim 8, in which the first and the second resilient blades (22) are supported by an annular body (25) and are symmetrical relative to the axis of rotation X.

10. Torsion damper according to one of Caims 1 to 9, in which the cam follower (24) is arranged radially outside the resilient blade (22).

11. Torsion damper according to one of Claims 1 to 10, in which the cam surface (23) is formed at one free end of the resilient blade (22).

12. Torsion damper according to Claim 11, in which the blade (22) comprises a curved portion (27) extending circumferentially, the cam surface (23) being formed at the free end thereof.

13. Torsion damper according to any one of Claims 1 to 12, in which the resilient blade (22) comprises a plurality of lamellas (28a, 28b, 28c, 28d, 28e) arranged axially against one another.

14. Clutch friction disk (1) comprising a torsion damper according to any one of Claims 1 to 13.

15. Clutch friction disk (1) according to Claim 14, in which one of the two flanges (12, 13) of the input element of said torsion damper consists of an output damper plate (7) of a second damper.
